Europäisches Patentamt

European Patent Office

Office européen des brevets

(11) Publication number: **0 228 022**
**A2**

# EUROPEAN PATENT APPLICATION

(21) Application number: **86117508.1**

(22) Date of filing: **16.12.86**

(51) Int. Cl.⁴: **C04B 35/58**

(30) Priority: **27.12.85 JP 298192/85**

(43) Date of publication of application:
**08.07.87 Bulletin 87/28**

(84) Designated Contracting States:
**DE FR GB**

(71) Applicant: **MITSUBISHI CHEMICAL INDUSTRIES LIMITED**
**5-2, Marunouchi 2-chome Chiyoda-ku Tokyo 100(JP)**

(72) Inventor: **Kaneko, Tsugio**
**2-236, Nishimagari-machi Yahatanishi-ku Kitakyushu-shi Fukuoka-ken(JP)**
Inventor: **Nishiyama, Yoshinobu**
**2-7, Aoyama 1-chome Yahatanishi-ku Kitakyushu-shi Fukuoka-ken(JP)**

(74) Representative: **Wächtershäuser, Günter, Dr.**
**Tal 29**
**D-8000 München 2(DE)**

(54) Process for preparing a silicon nitride powder mixture.

(57) A process for preparing a silicon nitride powder mixture with at least one metal oxide, which comprises mixing silicon nitride powder with a solution containing at least one nitrate of metal selected from the group consisting of metals of Groups IIA, IIB, IIIA, IIIB and IVA of the Periodic Table, then evaporating the solvent of said solution to dry the mixture, and baking the dried mixture to convert the metal nitrate to the corresponding metal oxide.

EP 0 228 022 A2

## PROCESS FOR PREPARING A SILICON NITRIDE POWDER MIXTURE

The present invention relates to a process for preparing silicon nitride powder mixture. More particularly, it relates to a process for preparing a silicon nitride powder mixture which is suitable for the preparation of a silicon nitride sintered product having a high density.

Ceramics containing silicon nitride powder as the main component are expected to be a prospective material for diesel engines, turbines, etc., by virtue of their high heat resistance and high strength at high temperatures. On the other hand, silicon nitride powder is hardly sinterable by itself, and a liquid phase sintering method is employed wherein various oxides are mixed as sintering additives to the silicon nitride powder to form a liquid phase composed of silicon nitride and the sintering additives at grain boundaries, followed by sintering (see e.g. "Synthesis and Application of Inorganic Polymers" published by K.K. C.M.C., pages 33-34).

As a method for mixing such sintering additives to the silicon nitride powder, it is common to employ a method of mixing and pulverizing the silicon nitride powder and a powder of the sintering additives in a ball mill or in a vibration mill. In such an operation of mixing powders to each other, if agglomerates are present, it will be extremely difficult to obtain a uniform mixture, pores are likely to form during sintering, or the liquid phase composition tends to be non-uniform, whereby the density and strength of the sintered product will be low. On the other hand, it has been proposed to incorporate the sintering additives in a large amount in order to obtain a readily sinterable powder mixture. However, such a method is likely to lead to an increase of a liquid phase which has a poor high temperature strength, whereby the high temperature strength tends to deteriorate.

The present inventors have conducted extensive researches for uniformly dispersing and mixing sintering additives to silicon nitride by utilizing a solid phase-liquid phase system and avoiding the inconvenience in mixing the powders to each other, by paying a particular attention to the dispersing and mixing properties of silicon nitride and the sintering additives in order to obtain a silicon nitride sintered product having excellent properties. As a result, it has been unexpectedly found that by dispersing silicon nitride powder in a solution of at least one nitrate of metal selected from the group consisting of metals of Groups IIA, IIB, IIIA, IIIB and IVA of the Periodic Table, then evaporating the solvent to precipitate the nitrate, followed by baking for oxidation and decomposition, it is possible to obtain silicon nitride powder having a sintering additive of the above element uniformly mixed. The present invention has been accomplished on the basis of this discovery.

Thus, the present invention provides a process for preparing a silicon nitride powder mixture with at least one metal oxide, which comprises mixing silicon nitride powder with a solution containing at least one nitrate of metal selected from the group consisting of metals of Groups IIA, IIB, IIIA, IIIB and IVA of the Periodic Table, then evaporating the solvent of said solution to dry the mixture, and baking the dried mixture to convert the metal nitrate to the corresponding metal oxide. A preferred process includes an additional step of pulverizing the baked mixture.

Now, the present invention will be described in detail with reference to the preferred embodiments.

The silicon nitride powder used as the starting material in the process of the present invention is not limited to any particular particle size or particle size distribution. Any silicon nitride powder may be employed as the starting material, so long as it has properties corresponding to the desired properties of the final powder product. Silicon nitride powder is usually in the form of secondary agglomerates. However, such does not create any particular problem since according to the present invention, the nitride solution penetrates into the spaces between particles.

The sintering additive is incorporated usually in an amount of from I to 30% by weight, preferably from 2 to 10% by weight, as calculated as the oxide relative to the silicon nitride powder mixture after baking. It is mixed in the form of a solution containing at least one nitrate of metal selected from the group consisting of metals of Groups IIA, IIB, IIIA, IIIB and IVA of the Periodic Table, i.e. not in the form of an oxide powder. As the solution containing the nitrate, it is common to employ a solution obtained by dissolving the nitrate in at least one solvent selected from the group consisting of water and lower alcohols having from I to 4 carbon atoms. However, the nitrate-containing solution may contain a solid nitrate to such an extent that the effects of the present invention can be obtained.

The slurry concentration of the mixture prepared by mixing the silicon nitride powder and the nitrate-containing solution, is usually from I to 60% by weight. However, if the slurry concentration exceeds 50% by weight, the mixture tends to be viscous or tends to hardly penetrate into the powder completely, and if the slurry concentration is low, the amount of the solvent to be removed increases. For these reasons, the slurry concentration is preferably from 20 to 50% by weight.

The mixing for dispersion is conducted preferably from 0.5 to 24 hours, more preferably from 1 to 2 hours, since the surface oxidation of the silicon nitride powder is likely to take place.

Then, the liquid medium of the slurry mixture is evaporated. This can be done by evaporation under heating or by spray drying, or vacuum-drying or freeze-drying. In the silicon nitride powder mixture thus dried, the sintering additive is present in the form of the nitrate, which is then converted to oxide by baking to obtain the desired silicon nitride powder mixture. The baking is conducted usually at a temperature of at least 450°C. However, if the temperature is too high, the surface oxidation of silicon nitride powder takes place. Therefore, the temperature is preferably from 500 to 700°C. If the baking is to be conducted at a high temperature of from 600 to 1000°C, it may be conducted in an inert gas atmosphere or in vacuum in order to prevent the surface oxidation of silicon nitride.

The silicon nitride powder mixture obtained by the above process, can be used by itself for the production of a silicon nitride sintered product. However, it is preferred to further pulverize the powder mixture with a view to improvement of the density and strength of the sintered product. Namely, during the evaporation of the solvent and during the baking of the dried mixture to decompose the nitrate-type additive into the oxide-type, the powder mixture undergoes agglomeration to some extent. When such a powder mixture is used for the preparation of a sintered product, it is likely to be hardly possible to obtain a high density. It is considered that pores created by the agglomeration serve as the starting points for fracture, whereby the deterioration in the strength is brought about.

The pulverization may be conducted in a dry system or in a wet system. However, when the particle size of the silicon nitride is in the order of submicrons, it is preferred to employ a wet system rather than the dry system. As a solvent used for this system is preferably a non-aqueous solvent with a view to avoiding the oxidation or hydrolysis of silicon nitride. Further, taking the drying operation in the subsequent step into consideration, it is preferred to employ a solvent having a relatively low boiling point, such as methanol, ethanol or acetone. The pulverizer is not limited to any particular type, and a ball mill, a vibration mill or the like may be employed. The pulverization time is determined by the state of agglomeration of the powder after pulverization. In the case of a usual rotary ball mill, the pulverization time is selected within a range of from 1 to 100 hours.

The pulverization of the silicon nitride powder mixture is conducted to minimize the agglomeration or to bring the powder in a weakly agglomerated state. Such a state of agglomeration of the powder can be determined from the pore size distribution of a compact prepared by press-molding the powder. Namely, the powder is pressed under a predetermined pressure to form a compact, and then the pore size distribution of the compact is measured by a mercury injection method. In the case of a powder composed of weak agglomerates which can be readily disintegrated under the molding pressure, the pore size distribution is sharp. On the other hand, in the case of a powder containing strong agglomerates which are hardly disintegrated under the molding pressure, the pore size distribution tends to be broad or to have a step or double peaks due to the presence of both small pores between primary particles and large pores between agglomerated particles. In the present invention, the ratio of a relative half value width obtained by the following method, is employed as the value representing the sharpness of the pore size distribution. The greater the relative half value width, the broader the pore size distribution curve and greater the agglomeration of the powder. Accordingly, the smaller the relative half value width, the better the pulverization. As mentioned hereinafter, the pulverization is conducted until the relative half value width of a compact obtained by monoaxially pressing the silicon nitride powder under a pressure of 1 ton/cm², has a ratio of at most 1.5, preferably at most 1 as compared with the relative half value width of a compact obtained in the same manner as above from the starting material silicon nitride powder (i.e. the powder used for mixing with the nitrate-containing solution). The pulverization is preferably conducted until the particle size becomes to be close to that of the primary particles. Thus, the ratio of the mode pore diameter to the mode pore diameter of the compact prepared from the starting material silicon nitride powder, is preferably at most 1.5, more preferably at most 1.

Method for measuring the state of agglomeration:

A few grams of the powder is weighed, and pressed monoaxially into a pellet having a diameter of 2 cm and a thickness of from 0.3 to 0.7 cm. The compacting pressure may be selected optionally, but is usually from 0.5 to 2 ton/cm² as the pressure of the conventional monoaxial press-molding or isotropic hydraulic molding. Accordingly, in the present invention, 1 ton/cm² was adopted as the standard pressure.

3

The pore size distribution of the compact thus obtained, was measured by the mercury injection method. From the pore size distribution curve thus obtained, the pore diameter showing the maximum value of the pore volume, was taken as the "mode pore diameter". Likewise, the difference between the pore diameter value equally dividing the pore volume on the side of pores smaller than the mode pore volume, and the pore diameter value equally dividing the pore volume on the side of pores larger than the mode pore diameter, is taken as the "relative half value width".

Now, the present invention will be described in further detail with reference to Examples. However, it should be understood that the present invention is by no means restricted to these specific Examples.

EXAMPLE I

Guaranteed reagents of yttrium nitrate, magnesium nitrate and aluminum nitrate were used as sintering additive sources. These additives were incorporated in the weight ratio as identified in Table I and in a total amount of 4% by weight, 6% by weight or I0% by weight, as calculated as their oxides i.e. yttria, alumina and magnesia, relative to silicon nitride powder.

To an aqueous solution having the above-mentioned composition, commercially available silicon nitride powder (average primary particle size: 0.6 μ m, average secondary agglomerated particle size: 50 μm) was added to bring the slurry concentration to 50% by weight, and the mixture was stirred for I hour. Then, the mixture was heated to evaporate water. The solid thus obtained was pulverized and dried, and the powder thus obtained was baked in atmospheric air at 600°C for I hour to convert the sintering additives to their oxides.

About 2 g of the powder thus obtained, was monoaxially pressed under a pressure of I00 kgf/cm², and further subjected to rubber pressing under a pressure of I.8 ton/cm² to obtain a pellet having a diameter of about 20 mm and a thickness of about 4 mm. Then, the pellet was charged in a cruicible containing a I:I powder mixture of silicon nitride and boron nitride as a cushioning powder, then heated in a nitrogen gas atmosphere at a temperature raising rate of 350°C/hr and sintered at I750°C or I800°C for 2 hours to conduct a sintering test.

In Table I, the state of agglomeration of the silicon nitride powder mixture used for the press-molding is shown by a ratio relative to the silicon nitride powder as the starting material, and the relative density of the sintered product is shown. Here, the relative density was obtained in accordance with the following formula:

(Apparent density/theoretical density) ˣ I00[%]

where the "apparent density" is calculated from the volume and the weight of the actual sintered product, and the "theoretical density" is the arithmetic mean, as an approximate value of the theoretical density, of the values obtained by multiplying the true densities of the silicon nitride and the sintering additives by the respective weight ratios.

EXAMPLE 2

A powder mixture obtained by baking in the same manner as in Example I, was placed in a ball mill pot made of silicon nitride, and silicon nitride balls (occupying about 30% of the internal capacity of the pot) were introduced. Then, ethanol was filled in the pot while driving out air bubbles, and the pot was closed with a cover. Then, the gravity system rotary ball mill pulverization was conducted for I2 hours. After the pulverization, the slurry was taken out, and ethanol was evaporated. Then, the dried product was roughly pulverized to obtain a powder mixture. This powder mixture was sintered in the same manner as in Example I. The results are shown in Table I.

COMPARATIVE EXAMPLE

The same silicon nitride powder as used in Example I was employed. As sintering additives, yttria, alumina and magnesia powders (purity: 99.9%, average particle size: 0.8-I μ m in each case) were used. The amounts of the respective sintering additives were the same as in Example I.

By using an alumina pot and balls occupying 30% of the internal capacity of this pot, ballmill mixing was conducted for I2 hours at a slurry concentration of 50% by using ethanol as the dispersing medium. Then, the mixture was dried at a temperature of from 80 to I00°C.

The sintering test was conducted in the same manner as in Example I. The results are shown in Table I.

4

Table 1

| Additives | | Example 1 | | | | Example 2 | | | |
|---|---|---|---|---|---|---|---|---|---|
| $Y_2O_3$:$Al_2O_3$:MgO (weight ratio) | Total amount (wt%) | State of agglomeration | | Relative density (%) | | State of agglomeration | | Relative density (%) | |
| | | Mode pore diameter (ratio) | Relative half value width (ratio) | 1750°C | 1800°C | Mode pore diameter (ratio) | Relative half value width (ratio) | 1750°C | 1800°C |
| 1:1:0 | 4 | 1.6 | 1.8 | 85.1 | 90.3 | 1.0 | 1.0 | 91.0 | 92.0 |
| " | 6 | 1.6 | 1.8 | 93.4 | 95.1 | 1.0 | 1.0 | 95.8 | 97.2 |
| " | 10 | 1.8 | 1.9 | 95.2 | 96.2 | 1.1 | 1.1 | 98.1 | 98.8 |
| 1:0:1 | 4 | 1.6 | 1.8 | 82.2 | 89.1 | 1.0 | 1.0 | 86.2 | 91.9 |
| " | 6 | 1.6 | 1.8 | 89.7 | 92.2 | 1.0 | 1.0 | 93.1 | 94.5 |
| " | 10 | 1.8 | 1.9 | 94.7 | 95.8 | 1.1 | 1.1 | 96.4 | 97.8 |
| 1:0.72:0.28 | 4 | 1.6 | 1.8 | 87.1 | 92.1 | 1.0 | 1.0 | 92.5 | 95.3 |
| " | 6 | 1.7 | 1.8 | 95.5 | 96.3 | 1.0 | 1.1 | 97.7 | 97.9 |
| " | 10 | 1.9 | 1.9 | 96.1 | 97.5 | 1.1 | 1.1 | 98.7 | 99.0 |

0 228 022

## Table 1 (continued)

| Additives | | Comparative Example | | | |
| Y$_2$O$_3$:Al$_2$O$_3$:MgO (weight ratio) | Total amount (wt%) | State of agglomeration | | Relative density (%) | |
| | | Mode pore diameter (ratio) | Relative half value width (ratio) | 1750°C | 1800°C |
|---|---|---|---|---|---|
| 1:1:0 | 4 | 1.0 | 1.0 | 78.8 | 81.2 |
| " | 6 | 1.0 | 1.0 | 84.2 | 86.2 |
| " | 10 | 1.0 | 1.0 | 88.2 | 91.0 |
| 1:0:1 | 4 | 1.0 | 1.0 | 78.2 | 80.6 |
| " | 6 | 1.0 | 1.0 | 84.2 | 86.3 |
| " | 10 | 1.0 | 1.0 | 87.1 | 89.8 |
| 1:0.72:0.28 | 4 | 1.0 | 1.0 | 80.1 | 82.3 |
| " | 6 | 1.0 | 1.0 | 85.2 | 88.3 |
| " | 10 | 1.0 | 1.0 | 89.8 | 92.4 |

EXAMPLE 3

The slurry mixture having the same composition as in Example I was dried by means of a spray dryer. The spray dryer employed was of a two fluid nozzle type. The subsequent operation was conducted in the same manner as in Example I. The results of the sintering test are shown in Table 2.

EXAMPLE 4

The operation was conducted in the same manner as in Example I except that the solvent for the nitrate solution was changed from water to the followings. The results of the sintering tests are shown in Table 2.

EXAMPLE 4-l: Ethanol
EXAMPLE 4-2: Methanol
EXAMPLE 4-3: Water/ethanol = l:l (volume ratio)

Table 2

| Additives | | Relative density (%) | | | | | | | |
| Y$_2$O$_3$:Al$_2$O$_3$:MgO (weight ratio) | Total amount (wt%) | Example 3 | | Example 4-1 | | Example 4-2 | | Example 4-3 | |
| | | 1750$^{\circ}$C | 1800$^{\circ}$C | 1750$^{\circ}$C | 1800$^{\circ}$C | 1750$^{\circ}$C | 1800$^{\circ}$C | 1750$^{\circ}$C | 1800$^{\circ}$C |
| 1:1:0 | 4 | 88.3 | 92.1 | 88.5 | 92.2 | 87.5 | 92.0 | 85.5 | 90.2 |
| " | 6 | 93.5 | 95.4 | 93.8 | 95.6 | 93.5 | 95.1 | 93.2 | 95.5 |
| " | 10 | 95.4 | 96.2 | 95.8 | 96.3 | 95.5 | 96.2 | 95.6 | 96.3 |
| 1:0:1 | 4 | 85.3 | 90.3 | 86.2 | 91.4 | 85.1 | 90.3 | 83.2 | 90.1 |
| " | 6 | 91.2 | 93.2 | 91.8 | 93.4 | 89.8 | 92.4 | 90.1 | 93.5 |
| " | 10 | 94.8 | 95.9 | 94.9 | 95.9 | 94.9 | 95.8 | 94.5 | 95.9 |
| 1:0.72:0.28 | 4 | 88.1 | 92.0 | 89.2 | 93.1 | 88.3 | 91.8 | 87.8 | 91.9 |
| " | 6 | 96.0 | 96.5 | 96.6 | 96.8 | 96.2 | 96.6 | 96.0 | 96.8 |
| " | 10 | 96.8 | 97.4 | 97.0 | 97.6 | 96.7 | 97.8 | 96.5 | 97.5 |

## EXAMPLE 5

Experiments were conducted in the same manner as in Examples I to 4 and Comparative Example except that the ratio of yttria/alumina/magnesia is changed to I/0.72/0.28 as calculated as the oxides, the total amount was changed to 4% by weight relative to the silicon nitride powder, and as the silicon nitride powder, a commercially available powder having an average primary particle size of 0.4 μm and an average secondary agglomerated particle size of 50 μm was added to the nitrate-containing solution to bring the slurry concentration to 25%.

The results i.e. the relative densities of the sintered products thus obtained, are shown in Table 3.

### Table 3

| Test conditions | Relative density (%) | |
|---|---|---|
| | $1750^{\circ}C$ | $1800^{\circ}C$ |
| Example 1 | 92.9 | 93.4 |
| Example 2 | 95.2 | 96.7 |
| Example 3 | 93.4 | 94.2 |
| Example 4-1 | 94.2 | 95.1 |
| Example 4-2 | 93.6 | 94.9 |
| Example 4-3 | 93.2 | 94.9 |
| Comparative Example | 86.0 | 89.2 |

When sintering is conducted by using silicon nitride powder mixture obtained by the process of the present invention, it is possible to increase the density of the sintered product by about from 3 to I5% over the case where a powder mixture obtained by mixing the silicon nitride powder and the sintering additive powders in a ball mill. This is believed to be attributable to that the sintering additives are more uniformly mixed in the silicon nitride powder mixture according to the present invention, and the liquid phase formation and the diminishing of pores are thereby readily facilitated. Thus, the process of the present invention provides a silicon nitride powder mixture suitable for sintering.

**Claims**

1. A process for preparing a silicon nitride powder mixture with at least one metal oxide, which comprises mixing silicon nitride powder with a solution containing at least one nitrate of metal selected from the group consisting of metals of Groups IIA, IIB, IIIA, IIIB and IVA of the Periodic Table, then evaporating the solvent of said solution to dry the mixture, and baking the dried mixture to convert the metal nitrate to the corresponding metal oxide.

2. The process according to Claim 1, wherein the metal is magnesium, calcium, scandium, yttrium, lanthanum, cerium, praseodymium, neodymium, samarium, europium, gadolinium, terbium, dysprosium, holmium, erbium, thulium, ytterbium, lutetium, aluminum or zirconium.

3. The process according to Claim 1, wherein the solvent of the solution containing the nitrate is at least one member selected from the group consisting of water and alcohols having from 1 to 4 carbon atoms.

4. The process according to Claim 1, wherein the metal oxide is incorporated in an amount of from 1 to 30% by weight as calculated as the oxide, relative to the silicon nitride powder mixture.

5. The process according to Claim 1, wherein the slurry concentration of the mixture obtained by mixing the silicon nitride powder with the nitrate-containing solution, is from 1 to 60% by weight, and the baking is conducted at a temperature of at least 450°C.

6. A process for preparing a silicon nitride powder mixture with at least one metal oxide, which comprises mixing silicon nitride powder with a solution containing at least one nitrate of metal selected from the group consisting of metals of Groups IIA, IIB, IIIA, IIIB and IVA of the Periodic Table, then evaporating the solvent of said solution to dry the mixture, baking the dried mixture to convert the metal nitrate to the corresponding metal oxide, and pulverizing the powder mixture thus obtained.

7. The process according to Claim 6, wherein the metal is magnesium, calcium, scandium, yttrium, lanthanum, cerium, praseodymium, neodymium, samarium, europium, gadolinium, terbium, dysprosium, holmium, erbium, thulium, ytterbium, lutetium, aluminum or zirconium.

8. The process according to Claim 6, wherein the solvent of the solution containing the nitrate is at least one member selected from the group consisting of water and alcohols having from 1 to 4 carbon atoms.

9. The process according to Claim 6, wherein the pulverization is conducted until the pore size distribution of a compact obtained by monoaxially pressing the pulverized silicon nitride powder mixture under a pressure of 1 ton/cm$^2$, has a mode pore diameter ratio of at most 1.5 and a relative half value width ratio of at most 1.5, as compared with the pore size distribution of a compact obtained by pressing the starting material silicon nitride powder under the same conditions.

10. The process according to Claim 6, wherein the pulverization is conducted in the presence of a non-aqueous solvent.

11. The process according to Claim 6, wherein the metal oxide is incorporated in an amount of from 1 to 30% by weight as calculated as the oxide relative to the silicon nitride powder mixture.

12. The process according to Claim 6, wherein the slurry concentration of the mixture obtained by mixing the silicon nitride powder with a nitrate-containing solution, is from 1 to 60% by weight, and the baking is conducted at a temperature of at least 450°C.